# EUROPEAN PATENT APPLICATION

(11) **EP 4 460 058 A1**
(43) Date of publication of application: **06.11.2024**
(21) Application number: 22914894.5
(22) Date of filing: 28.12.2022
(51) Int. Cl.: H04W 12/04

(54) **AUTHENTICATION AND/OR KEY MANAGEMENT METHOD, FIRST DEVICE, TERMINAL AND COMMUNICATION DEVICE**

(30) Priority: 31.12.2021 CN 202111681982; 20.06.2022 CN 202210701819
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: ZHUANG, Xiaojun, Beijing 100053 (CN); HUANG, Xiaoting, Beijing 100053 (CN); TIAN, Ye, Beijing 100053 (CN)
(74) Representative: GPI Brevets
(86) International application number: PCT/CN2022/142733
(87) International publication number: WO 2023/125642

(57) **Abstract**

The present disclosure discloses an authentication and/or key management method, a first device, a terminal and a communication device. The method includes: receiving, by a first device, a session establishment request message initiated by a user equipment (UE), where the request message carries a key identifier; acquiring, by the first device, a first key between the first device and the UE according to the key identifier.

## Description

### CROSS REFERENCE OF RELATED APPLICATION

The present disclosure claims a priority of Chinese patent disclosure No. 202111681982.1 filed on December 31, 2021 and a priority of Chinese patent disclosure No. 202210701819.5 filed on June 20, 2022, which are incorporated herein by reference in its entirety.

### TECHNICAL FIELD

The present disclosure relates to the field of communication technology, and in particular to an authentication and/or key management method, a first device, a terminal and a communication device.

### BACKGROUND

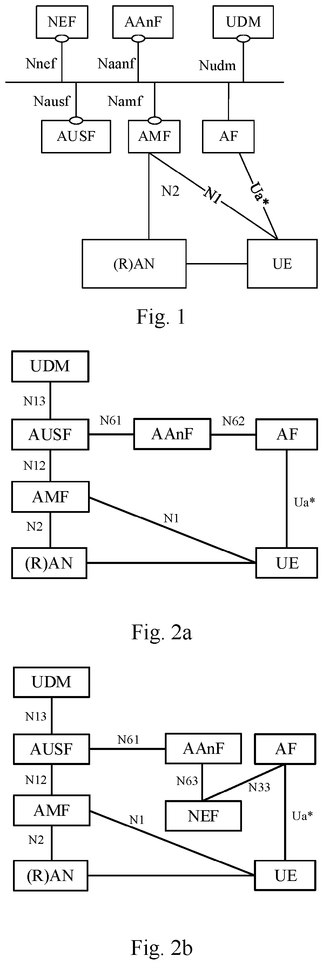

Currently, there is an architecture and process based on 3GPP credentials in 5G (fifth-generation mobile communication technology) to provide authentication and key management capabilities for upper-layer applications, including the basic network model of Authentication and Key Management for Applications (AKMA), AKMA derivation and anchoring process, and the derivation process of AKMA application key (K_{AF}), as shown in Figs. 1 to 4.

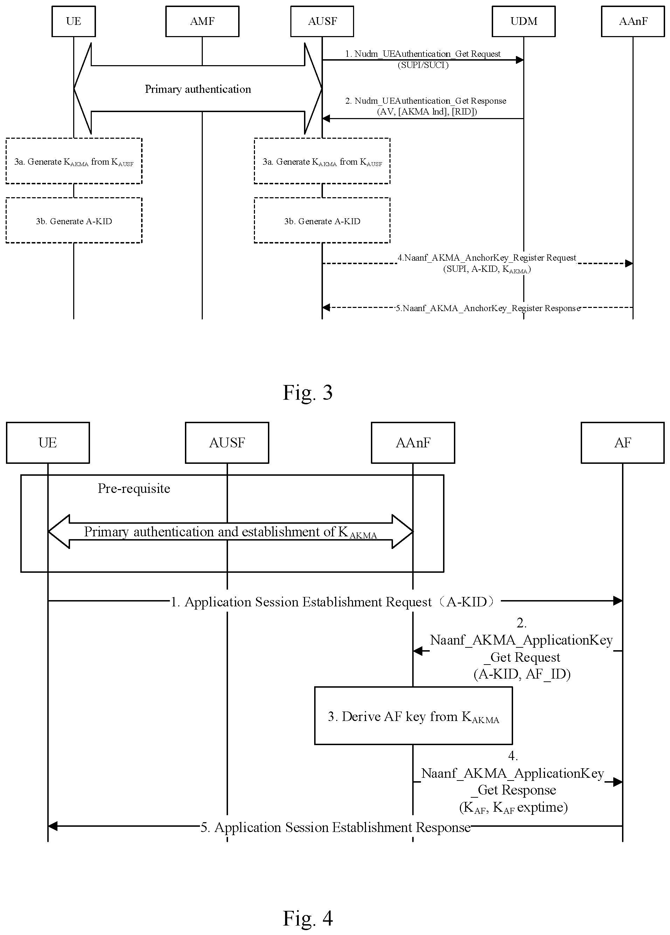

When UE (User Equipment, also known as terminal or user) needs to use AKMA to generate application layer shared keys with multiple Application Function (AFs) at the same time, the following problems exist: if AF does not support AKMA, the AKMA application key derivation process shown in Fig. 4 cannot be used to generate the application key between UE and AF; if all AFs belong to the same trust domain, when a UE establishes AKMA with each AF, it will make Authentication Server Function (AUSF) and AKMA Anchor Function (AAnF) to generate K_{AKMA} (AKMA Anchor Key) and K_{AF} (AKMA Application Key) for each UE and AF respectively, so the AUSF and AAnF resources are consumed and network bandwidth is consumed, then the ttackers can even use malicious UEs to deliberately initiate AKMA processes, resulting in resource consumption of AUSF and AAnF.

### SUMMARY

To solve related technical problems, an embodiment of the present disclosure provides an authentication and/or key management method, a first device, a terminal and a communication device.

The technical solution of the embodiment of the present disclosure is implemented as follows:

An authentication and/or key management method is provided in the embodiment of the present disclosure, including:
receiving, by a first device, a session establishment request message initiated by a user equipment (UE), where the request message carries a key identifier;
acquiring, by the first device, a first key between the first device and the UE according to the key identifier.

Optionally, the method further includes:
generating, by the first device, a second key between the UE and a second device for the second device according to the first key.

Optionally, the generating, by the first device, the second key between the UE and the second device for the second device according to the first key includes:
generating, by the first device, a second key based on the first key and identification information of the second device.

Optionally, the method further includes:
receiving, by the first device, a data which is protected by the UE based on a third key, and sending the data to the second device, where the third key is generated by the UE and is the same as the first key;
   and/or,
receiving, by the first device, data sent by the second device, protecting the data based on the first key, and sending the data to the UE.

Optionally, the acquiring the first key between the first device and the UE according to the key identifier includes:
acquiring, by the first device, a local first key corresponding to the key identifier according to the key identifier;
   or,
acquiring, by the first device, a first key corresponding to the key identifier from an AKMA Anchor Function (AAnF) according to the key identifier.

Optionally, the method further includes: providing for the UE, by the first device, a list of second devices that the UE is able to access.

Optionally, the method further includes: establishing, by the first device, a transport layer security (TLS) secure channel with the UE.

Optionally, the establishing by the first device the TLS secure channel with the UE includes:
generating, by the first device, a premaster key or an external pre-shared key of the TLS secure channel based on the first key or a key derived from the first key.

Optionally, the method further includes:
sending, by the first device, first protected data to the UE, where the first protected data includes data protected by the first device based on the first key or the key derived from the first key.

Optionally, the method further includes:
receiving, by the first device, data sent by the UE and protected based on a third key or a key derived from the third key, where the third key is a key generated by the UE and is the same as the first key.

Optionally, the first device is configured to a proxy of a group of application functions (AF)/application servers (AS) or to a proxy of AF/AS in a same trust domain.

Optionally, the first device includes an Authentication and Key Management for Applications (AKMA) application proxy, or an authentication proxy, or an AKMA authentication proxy.

An authentication and/or key management method is further provided in the embodiment of the present disclosure, including:
sending, by a user equipment (UE), a session establishment request message to a first device, where the request message carries a key identifier;
receiving, by the UE, a first protected data sent by the first device, where the first protected data includes a data protected by the first device based on a first key or a key derived from the first key, where the first key is acquired by the first device according to the key identifier.

Optionally, the method further includes:
generating, by the UE, a third key that is the same as the first key, and sending, to the first device, a data protected by the third key or a key derived from the third key, to enable the first device to send the data to a second device;
   and/or,
generating, by the UE, a fourth key that is the same as a second key, and receiving a second protected data sent by the second device, where the second protected data includes a data protected by the second device based on the second key, where the second key is generated by the first device for the second device based on the first key;
   and/or,
receiving, by the UE, a data protected and forwarded by the first device based on the first key.

Optionally, the method further includes:
acquiring, by the UE, from the first device, a list of second devices that the UE is able to access.

Optionally, the method further includes:
establishing, by the UE, a transport layer security (TLS) secure channel with the first device.

Optionally, the establishing by the UE the TLS secure channel with the first device includes:
generating, by the UE, a third key that is the same as the first key;
generating, by the UE, a premaster key or an external pre-shared key of the TLS secure channel based on the third key or a key derived from the third key.

Optionally, the first device is configured to a proxy of a group of application functions (AF)/application servers (AS) or to a proxy of AF/AS in a same trust domain.

Optionally, the first device includes an AKMA Application Proxy (AAP)/ Authentication proxy (AP).

A first device for authentication and/or key management is provided in the embodiment of the present disclosure, including a first processing module and a first acquisition module; where
the first processing module is configured to receive a session establishment request message initiated by a user equipment (UE), where the request message carries a key identifier;
the first acquisition module is configured to acquire a first key between the first device and the UE according to the key identifier.

Optionally, the first device further includes a generating module:
the generating module is configured to generate a second key between the UE and a second device for the second device according to the first key.

Optionally, the generating module is further configured to:
generate a second key based on the first key and identification information of the second device.

Optionally, the first processing module is further configured to:
receive a data which is protected by the UE based on a third key, and sending the data to the second device, where the third key is generated by the UE and is the same as the first key;
   and/or,
receive data sent by the second device, protecting the data based on the first key, and sending the data to the UE.

Optionally, the first acquisition module is further configured to:
obtain a local first key corresponding to the key identifier according to the key identifier;
   or,
obtain a first key corresponding to the key identifier from an AKMA Anchor Function (AAnF) according to the key identifier.

Optionally, the first processing module is further configured to: provide for the UE a list of second devices that the UE is able to access.

Optionally, the first processing module is further configured to: establish a transport layer security (TLS) secure channel with the UE.

Optionally, the first processing module is further configured to:
generate a premaster key or an external pre-shared key of the TLS secure channel based on the first key or a key derived from the first key.

Optionally, the first processing module is further configured to:
send first protected data to the UE, where the first protected data includes data protected by the first device based on the first key or the key derived from the first key.

Optionally, the first processing module is further configured to:
receive data sent by the UE and protected based on a third key or a key derived from the third key, where the third key is a key generated by the UE and is the same as the first key.

Optionally, the first device is configured to a proxy of a group of application functions (AF)/application servers (AS) or to a proxy of AF/AS in a same trust domain.

Optionally, the first device includes an AKMA Application Proxy (AAP)/ Authentication proxy (AP).

A terminal for authentication and/or key management is further provided in the embodiment of the present disclosure, including a second processing module and a first receiving module:
the second processing module is configured to send a session establishment request message to a first device, where the request message carries a key identifier;
the first receiving module is configured to receive a first protected data sent by the first device, where the first protected data includes a data protected by the first device based on a first key, where the first key is acquired by the first device according to the key identifier.

Optionally, the terminal further includes:
a third processing module, configured to generate a third key that is the same as the first key, and sending, to the first device, a data protected by the third key or a key derived from the third key, to enable the first device to send the data to a second device;
a fourth processing module, configured to generate a fourth key that is the same as a second key, and
a second receiving module, configured to receive a second protected data sent by the second device, where the second protected data includes a data protected by the second device based on the second key, where the second key is generated by the first device for the second device based on the first key;
and/or receive a data protected and forwarded by the first device based on the first key.

Optionally, the terminal further includes:
a second acquiring module, configured to acquire from the first device, a list of second devices that the UE is able to access.

Optionally, the second processing module is further configured to:
establish a transport layer security (TLS) secure channel with the first device.

Optionally, the second processing module is configured to:
generate a third key that is the same as the first key;
generate a premaster key or an external pre-shared key of the TLS secure channel based on the third key or a key derived from the third key.

Optionally, the first device is configured to a proxy of a group of application functions (AF)/application servers (AS) or to a proxy of AF/AS in a same trust domain.

Optionally, the first device includes an AKMA Application Proxy (AAP)/ Authentication proxy (AP).

A communication device is further provided in the embodiment of the present disclosure, including a memory, a processor, and a program stored in the memory and executable on the processor; the processor is configured to execute the program to perform the authentication and/or key management method hereinabove.

A computer-readable storage medium is further provided in the embodiment of the present disclosure, where a computer program is stored in the computer-readable storage medium, the computer program is executed by a processor to perform the authentication and/or key management method hereinabove.

The above technical solution of the present disclosure has at least the following beneficial effects:

According to the authentication and/or key management method, the first device, the terminal and the communication device provided in the embodiments of the present disclosure, AAP/AP (that is, the first device, where AAP refers to AKMA application proxy or AKMA authentication proxy, and AP refers to authentication proxy) into the AKMA basic network model. The AAP/AP acts as a proxy for a group of AF/AS or AF/AS in the same trust domain, or a certain AF/AS in a group of AF/AS or AF/AS in the same trust domain may act as AAP/AP. That is to say, AAP/AP may replace one or more AF/AS to apply for AKMA application keys, and AF/AS trusts AAP/AP, thereby reducing the resources used by AUSF and AAnF when establishing AKMA application keys for UE and AF/AS, reducing the delay in acquiring AKMA keys, and meeting the service requirements of low-latency scenarios. Moreover, it may also solve the problem in the related art that AF does not support the AKMA basic network model, but still needs to use AKMA to implement application layer authentication and key provision.

### BRIEF DESCRIPTION OF THE DRAWINGS

Fig. 1 is a schematic view of a basic network model of AKMA in the related art;
Fig.2a is a schematic view of a reference point network model of AKMA of an AF within a core network in the related art;
Fig.2b is a schematic view of a reference point network model of AKMA of an AF outside a core network in the related art;
Fig.3 is a flowchart of K _{AKMA} derivation and anchoring in the related art;
Fig.4 is a schematic view of a derivation process of AKMA application key in the related art;
Fig.5 is a schematic view of an AKMA network model introducing AAP/AP in an embodiment of the present disclosure;
Fig.6a is a schematic view of an AKMA reference point network model of an AF/AS introducing an AAP/AP within a core network in an embodiment of the present disclosure;
Fig.6b is a schematic view of an AKMA reference point network model of an AF/AS introducing an AAP/AP outside a core network in an embodiment of the present disclosure;
Fig.7 is a flow chart of an authentication and/or key management method in an embodiment of the present disclosure;
Fig.8 is another flow chart of an authentication and/or key management method in an embodiment of the present disclosure;
Fig.9 is a schematic view of an authentication and/or key management method in an embodiment of the present disclosure;
Fig. 10 is another schematic view of an authentication and/or key management method in an embodiment of the present disclosure;
Fig. 11 is a schematic view of a first device in an embodiment of the present disclosure;
Fig. 12 is a schematic view of a terminal in an embodiment of the present disclosure; and
Fig. 13 is a schematic view of AAP/AP deployment in a low-latency scenario in an edge cloud system in an embodiment of the present disclosure.

### DETAILED DESCRIPTION

In order to make the technical problems, technical solutions and advantages to be solved by the present disclosure clearer, a detailed description will be given below with reference to the accompanying drawings and specific embodiments.

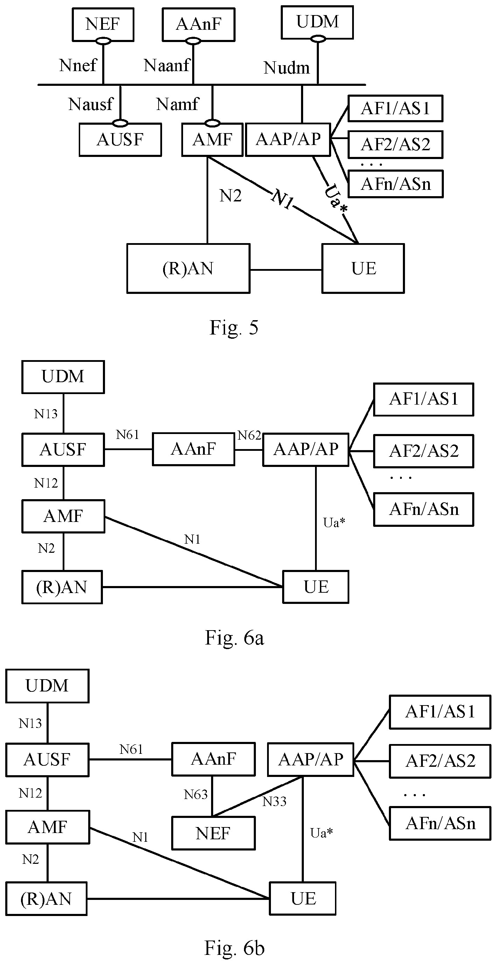

As shown in Figs 5, 6a, and 6b, the embodiment of the present disclosure provides an AKMA basic network model introducing AAP/AP, a schematic view of an AKMA reference point network model of an AF/AS introducing AAP/AP in a core network, and a schematic view of an AKMA reference point network model of an AF/AS introducing AAP/AP outside a core network. AAP/AP is a newly added entity on the relevant architecture, where AAP refers to an AKMA Application Proxy or an AKMA Authentication Proxy, and AP refers to an Authentication Proxy. The AAP/AP acts as a proxy for a group of AF/ASs or AF/ASs in the same trust domain, or a certain AF/AS in a group of AF/ASs or AF/ASs in the same trust domain may serve as an AAP/AP. The AAP/AP may replace one or more AF/ASs to apply for an AKMA application key. The AF/AS trusts the AAP/AP, and each AF/AS may belong to the same trust domain, such as a group of applications in the same vertical industry. In addition, it can be understood that AF is a name defined according to network functions, similar to other network functions (also understood as network elements) of the 5G system; while AS is defined at the service level and divided according to service functions. Therefore, AS is generally not visible to the network layer, but generally, AF can be implemented by AS, that is, AF and AS can be equivalent concepts in some cases.

K_{AKMA} derivation and anchoring process after the introduction of AAP/AP in the embodiment of the present disclosure is the same as the original standard process. As shown in the process in Fig. 3, both UE and AAnF have K_{AKMA}, and the AKMA application key derivation process will be performed at this time.

Before the communication between UE and AAP/AP begins, UE and AAP/AP need to know whether AKMA can be used, and UE and AAP/AP need to know which AF/AS the UE can generate application keys with through AAP/AP. This is implicit in the specific application of UE and AAP/AP, or indicated by AAP/AP to UE, such as when the user initiates access, the AAP/AP replies through a Ua* protocol, a AKMA startup message and the list of AF/AS that UE can access through AAP/AP, and the list of AF/AS contains the identifier of each AF/AS. The identifiers of AF/AS maintained by one AAP/AP are not repeated.

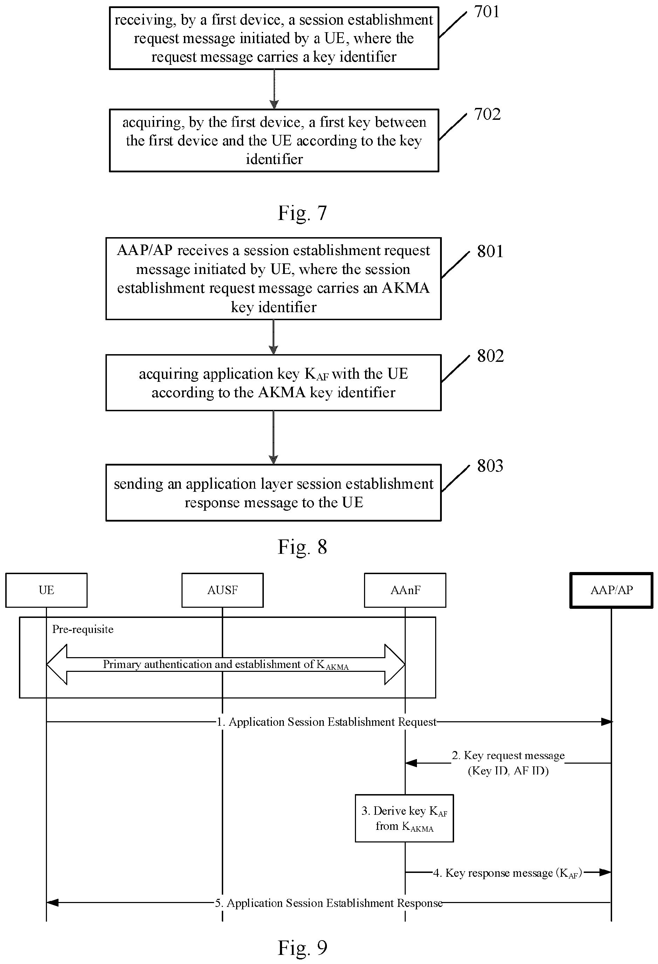

As shown in Fig. 7, an embodiment of the present disclosure provides an authentication and/or key management method, the method including:
Step 701: receiving, by a first device, a session establishment request message initiated by a user equipment (UE), where the request message carries a key identifier;
The first device may include AAP/AP, specifically AAP/AP inside the operator network, or AAP/AP outside the operator network. When the AAP/AP is outside the operator network, the AAP/AP communicates with the core network element through NEF.

The key identifier carried in the session establishment request message may be an AKMA key identifier A-KID.

In actual application, after passing the authentication and authorization of the operator network, the AAP/AP can request the AKMA application key K_{AF} from the AAnF through the AKMA key identifier A-KID. The AAP/AP can act as a proxy for a group of AF/ASs or AF/ASs in the same trust domain, or one AF/AS in a group of AF/ASs or AF/ASs in the same trust domain can act as the AAP/AP to derive the AKMA key from K_{AF} for these AF/ASs.

Step 702: acquiring, by the first device, a first key between the first device and the UE according to the key identifier.

In this step, the first device obtains the first key between the first device and the UE according to the key identifier. The first key may be an AKMA application key K_{AF}, and then the first device may derive an AKMA key for other AFs/ASs in a group or in the same trust domain according to the first key.

Specifically, the acquiring the first key between the UE and the key identifier includes:
acquiring, by the first device, a local first key corresponding to the key identifier according to the key identifier;
   or,
acquiring, by the first device, a first key corresponding to the key identifier from an AKMA Anchor Function (AAnF) according to the key identifier.

In the embodiment of the present disclosure, the first device may serve as a proxy for a group of AFs/ASs or AFs/ASs in the same trust domain. When serving as a proxy for AFs/ASs in the same trust domain, the first device may generate a second key between the UE and the second device for the second device based on the first key. Specifically, the first device may generate the second key based on the first key and the identification information of the second device, where the second device and the first device are in the same trust domain.

In the embodiment of the present disclosure, the data is transmitted between the first device and the second device or UE. Specifically, the first device receives data protected by the UE based on a third key, and sends the data to the second device, the third key is generated by the UE and is the same as the first key; and/or, the first device receives data sent by the second device, protects the data based on the first key, and sends the data (i.e., the data protected by the first key) to the UE.

In actual applications, the first device may provide the UE with a list of second devices that the UE can access, and the list may include an identifier of each second device, and the identifiers of the second devices are not repeated.

In the embodiments, the method may further include: the first device and the UE establish a TLS secure channel; in this way, the first device and the UE may perform a secure transmission through the TLS secure channel.

Those skilled in the art can understand that the essence of establishing a secure channel is essentially: the first device and the UE respectively derive a pair of symmetric keys, and use the symmetric keys to encrypt data and/or protect the integrity of data.

In an embodiment of the present disclosure, the first device establishes a TLS secure channel with the UE include: generating, by the first device, a premaster key or an external pre-shared key of the TLS secure channel based on the first key or a key derived from the first key. That is, the embodiment of the present disclosure can use the first key or key derived from the first key generated based on the AKMA technology as a pre-shared key (Pre-shared key/secret, or Pre shared key/secret) for establishing the TLS channel, and derive the premaster key (Premaster key/secret) or external pre-shared key (external pre-shared key/secret, PSK) of the TLS secure channel (the concepts of premaster key and external pre-shared key are equivalent. To simplify the description, the following text will only use the name of premaster key for explanation), and then the data can be encrypted and/or the integrity of data is protected according to the premaster key or the key derived from the premaster key. The advantage of doing this is that, it not only cleverly uses the first key or the key derived from the first key generated by the AKMA mechanism to solve the problem of setting the TLS channel pre-shared key, but also uses the TLS secure channel mechanism to effectively ensure the security of communication between the first device and the UE. This solution does not require additional complex operations, or does not require large improvements to the device. The solution is simple and easy to implement, and it is easy to deploy and promote on a large scale.

In the embodiments, the method may further include:
sending, by the first device, first protected data to the UE, where the first protected data includes data protected by the first device based on the first key or the key derived from the first key.

In the embodiments, the method may further include:
receiving, by the first device, data sent by the UE and protected based on a third key or a key derived from the third key, where the third key is a key generated by the UE and is the same as the first key.

If the first device and the UE use a TLS secure channel to protect communication security, then the first key or the key derived from the first key here is also the premaster key of the TLS channel or the key derived from the premaster key, and then the premaster key or the key derived from the premaster key is configured to perform data security protection.

Similarly, if the first device and the UE use a TLS secure channel to protect communication security, then the third key or the key derived from the third key here is the premaster key of the TLS channel or the key derived from the premaster key, and then the premaster key or the key derived from the premaster key is configured to perform data security protection.

The derived key here can be understood as a key derived from the first key/third key after one or more derivations. The derived key after the first key is derived n times can be used as the pre-shared key of the TLS channel, and the derived key after the first key is derived m times can be used as the premaster key of the TLS channel. The key derived from the third key is similar to the key derived from the first key.

The following describes the technical solution provided by this proposal in combination with actual network deployment:
As shown in Figs. 8 and 9, an embodiment of the present disclosure provides an authentication and/or key management method, the method including:
Step 801: AAP/AP receives a session establishment request message initiated by UE, where the session establishment request message carries an AKMA key identifier;
Among them, the full name of A-KID is AKMA Key Identifier, AKMA key identifier, abbreviated as AKMA key identifier.

Specifically, in actual application, before this step, K_{AKMA} and A-KID can be derived from K_{AUSF}.

When the UE initiates communication with the AAP/AP, the A-KID parameter is included in the Application Session Establishment Request message. The UE may derive K_{AKMA} and/or K_{AF} before or after sending the message.

Step 802: acquiring K_{AF} with the UE according to the AKMA key identifier;

The AAP/AP can select an AAnF to send a key request message and receive the AKMA application key K_{AF} carried in the AAnF response message;

If there is no activation context associated with A-KID in AAP/AP, AAP/AP may select an AAnF and sends a Naanf_AKMA_ApplicationKey_Get Request message (i.e., a key request message) to AAnF to request the UE's K_{AF}. AAP/AP can select an AAnF according to the process defined in the related aft.

The key request message carries the A-KID and the AF/AS identifier (such as AF_ID). The AF_ID may include the FQDN (Fully Qualified Domain Name) of the AF and a security protocol identifier, which may be represented as a Ua* protocol identifier, where the Ua* protocol identifier is configured to identify the security protocol used between the AAP/AP and the UE.

In actual application, AAnF can confirm whether to provide services to AAP/AP based on the configured local policy or the authorization information or policy provided by NRF (Network Repository Function). Specifically, AAnF confirming whether to provide services to AAP/AP may include:
the AAnF checks whether the AAnF can provide services to the AAP/AP according to the AF/AS identifier;
when the check result shows that the AAnF can provide services to the AAP/AP, searching whether the AAnF has a valid K_{AKMA} according to the A-KID;
when there is a valid K_{AKMA} in the AAnF, determining the AKMA that the user is authorized to use;
when there is no valid K_{AKMA} in the AAnF, issuing an error response.

According to Fig. 9, if AAnF does not have K_{AF}, AAnF derives the UE's AKMA application key K_{AF} from K_{AKMA}.

The specific process of deriving K_{AF} can be performed according to the definition in the relevant art, and will not be described in detail in the embodiment of the present disclosure.

As shown in Fig.9, AAnF can send a Naanf_AKMA_ApplicationKey_Get Response message (i.e., a key response message) to AAP/AP, and the key response message carries K_{AF} and a life cycle, i.e., AAP/AP receives the UE's AKMA application key K_{AF} and life cycle of the UE carried in the key response message sent by AAnF.

Step 803: sending an application layer session establishment response message to the UE.

Combining Fig. 8 with Fig. 9, it can be seen that AAP/AP sends an Application Session Establishment Response message to UE. If the information in step 4 of Fig. 9 indicates that the AKMA key request fails, AAP/AP should reject the application session establishment request and carry the error reason in this step. After that, UE may initiate a new application session establishment request to AAP/AP, to carry the latest A-KID.

In actual application, when the AAP/AP is located outside the operator network, the AAP/AP can obtain the K_{AF} and life cycle from the AAnF through the Network Exposure Function (NEF).

After the UE and AAP/AP have K_{AF}, AAP/AP can derive a key based on the AF/AS associated with AAP/AP, such as using K_{AF} and the identity of AF/AS as inputs for deriving the application key between UE and AF/AS. UE generates the application key between UE and AF/AS based on the same algorithm. When the UE sends an application request to AF/AS, AF/AS can request the application key from AAP/AP, and then perform subsequent authentication or session protection with the UE based on the key.

In actual application, AAP/AP may not derive a separate key for AF/AS. When UE communicates with AF/AS, the AF/AS identifier can be carried in the service message and sent to AAP/AP, which is then forwarded to AF/AS. Since UE and AAP/AP can perform authentication and data transmission protection, and AAP/AP and AF/AS trust each other and can communicate using a security protocol, hop-by-hop application layer security protection can be achieved between UE and AAP/AP, and between AAP/AP and AF/AS, thereby achieving data transmission security from UE to each AF/AS.

The authentication and/or key management method provided in the embodiment of the present disclosure introduces AAP/AP in the AKMA basic network model. The AAP/AP acts as a proxy for a group of AF/AS or AF/AS in the same trust domain, or a certain AF/AS in a group of AF/AS or AF/AS in the same trust domain can also act as AAP/AP. That is to say, AAP/AP can replace one or more AF/AS to apply for AKMA application keys. AF/AS trusts AAP/AP, thereby reducing the resources used by AUSF and AAnF when establishing AKMA application keys for UE and AF/AS, reducing the delay in acquiring AKMA keys, and meeting the service requirement of low-latency scenarios.

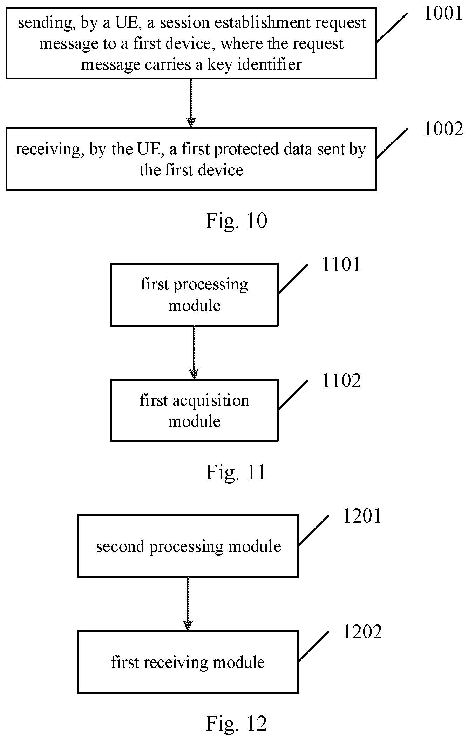

As shown in Fig. 10, an embodiment of the present disclosure further provides an authentication and/or key management method, the method including:
Step 1001: sending, by a user equipment (UE), a session establishment request message to a first device, where the request message carries a key identifier;
The first device may include AAP/AP, specifically may include AAP/AP inside the operator network, or AAP/AP outside the operator network. When the AAP/AP is located outside the operator network, the AAP/AP may communicate with the core network element through NEF.
Step 1002: receiving, by the UE, a first protected data sent by the first device;
Specifically, the first protected data includes data protected by the first device based on a first key or a key derived from the first key, the first key is acquired by the first device according to a key identifier, and the first key may be an AKMA application key K_{AF}.

For the first device, as a proxy of a group of AFs/ASs or AFs in the same trust domain, after acquiring the first key, it can derive the AKMA key from KAF for these AFs/ASs. The first key is acquired by the first device according to the key identifier. Specifically, the first device can obtain the first key corresponding to the key identifier locally according to the key identifier; or, the first device can obtain the first key corresponding to the key identifier from AAnF according to the key identifier.

As for the UE, the UE can generate a third key that is the same as the first key, and generate a fourth key that is the same as the second key, that is, the AKMA application key on the UE side is generated by the UE itself, and generates a third key and a fourth key for communicating with the first device and the second device respectively, and the third key and the fourth key are the same as the first key and the second key respectively. The AKMA application key of AF/AS is generated by AAP/AP. As described above, the second key is generated based on the first key and the identification information of the second device.

In the embodiment of the present disclosure, data is transmitted between the first device and the second device or UE. Specifically, the UE may send data protected by the third key or a key derived from the third key to the first device, so that the first device sends the data to the second device.
and/or, the UE may receive second protection data sent by the second device, where the second protection data includes data protected by the second device based on the second key, where the second key is generated by the first device for the second device based on the first key;
and/or, the UE may receive data protected and forwarded by the first device based on the first key.

In the embodiments, the method may further include: the UE establishing a TLS secure channel with the first device.

In the embodiments, the UE establishing a TLS secure channel with the first device may specifically include:
The UE generates a third key that is the same as the first key;
The UE generates a premaster key or an external pre-shared key of the TLS secure channel according to the third key or a key derived from the third key. The content of this part of the UE has been explained in the content of the first device above, and will not be repeated here.

In actual applications, the first device can provide the UE with a list of second devices that the UE can access, that is, the UE can obtain the list of second devices that the UE can access from the first device, and the list can include the identifier of each second device, and the identifiers of the second devices are not repeated.

The authentication and/or key management method provided in the embodiment of the present disclosure introduces AAP/AP into the AKMA basic network model. AAP/AP can replace one or more AF/AS to apply for AKMA application keys. AF/AS trusts AAP/AP. UE obtains the first key between AUSF and AAnF when establishing AKMA application keys for UE and AF/AS, thereby reducing the resources required by AUSF and AAnF to establish AKMA application keys for UE and AF/AS, reducing the delay in acquiring AKMA keys, and meeting the service requirements of low-latency scenarios.

As shown in Fig. 11, the embodiment of the present disclosure further provides a first device for authentication and/or key management, the first device including a first processing module 1101 and a first acquisition module 1102;
the first processing module 1101 is configured to receive a session establishment request message initiated by a user equipment (UE), where the request message carries a key identifier;
the first acquisition module 1102 is configured to acquire a first key between the first device and the UE according to the key identifier.

In the embodiments, the first device further includes a generating module:
the generating module is configured to generate a second key between the UE and a second device for the second device according to the first key.

In some embodiments, the generating module is further configured to:
generate a second key based on the first key and identification information of the second device.

In the embodiments, the first processing module is further configured to:
receive a data which is protected by the UE based on a third key, and sending the data to the second device, where the third key is generated by the UE and is the same as the first key;
   and/or,
receive data sent by the second device, protecting the data based on the first key, and sending the data to the UE.

In some embodiments, the first acquisition module 1102 is further configured to:
obtain a local first key corresponding to the key identifier according to the key identifier;
   or,
obtain a first key corresponding to the key identifier from an AKMA Anchor Function (AAnF) according to the key identifier.

In the embodiments, the first processing module 1101 is further configured to: provide for the UE a list of second devices that the UE is able to access.

In the embodiments, the first processing module 1101 is further configured to: establish a transport layer security (TLS) secure channel with the UE.

In the embodiments, the first processing module 1101 is further configured to:
generate a premaster key or an external pre-shared key of the TLS secure channel based on the first key or a key derived from the first key.

In the embodiments, the first processing module 1101 is further configured to:
send first protected data to the UE, where the first protected data includes data protected by the first device based on the first key or the key derived from the first key.

In the embodiments, the first processing module 1101 is further configured to:
receive data sent by the UE and protected based on a third key or a key derived from the third key, where the third key is a key generated by the UE and is the same as the first key.

The first device of the present disclosure can replace one or more AF/AS to apply for AKMA application keys. These AF/AS trust the first device and can belong to the same trust domain, thereby reducing the resources used by AUSF and AAnF when establishing AKMA application keys for UE and AF/AS, reducing the delay in acquiring AKMA keys to a certain extent, and meet the service requirements of low-latency scenarios.

It should be noted that the first device provided in the embodiment of the present disclosure is a device capable of executing the above-mentioned authentication and/or key management method. All embodiments of the above-mentioned authentication and/or key management method are applicable to the first device and can achieve the same or similar beneficial effects.

As shown in Fig. 12, the embodiment of the present disclosure further provides a terminal for authentication and/or key management, the terminal including a second processing module 1201 and a first receiving module 1202:
the second processing module 1201 is configured to send a session establishment request message to a first device, where the request message carries a key identifier;
the first receiving module 1202 is configured to receive a first protected data sent by the first device, where the first protected data includes a data protected by the first device based on a first key, where the first key is acquired by the first device according to the key identifier.

In the embodiments, the terminal further includes:
a third processing module, configured to generate a third key that is the same as the first key, and sending, to the first device, a data protected by the third key or a key derived from the third key, to enable the first device to send the data to a second device;
a fourth processing module, configured to generate a fourth key that is the same as a second key, and
a second receiving module, configured to receive a second protected data sent by the second device, where the second protected data includes a data protected by the second device based on the second key, where the second key is generated by the first device for the second device based on the first key;
and/or receive a data protected and forwarded by the first device based on the first key.

In the embodiments, the terminal further includes:
a second acquiring module, configured to acquire from the first device, a list of second devices that the UE is able to access.

In the embodiments, the second processing module 1201 is further configured to:
establish a transport layer security (TLS) secure channel with the first device.

In the embodiments, the second processing module 1201 is configured to:
generate a third key that is the same as the first key;
generate a premaster key or an external pre-shared key of the TLS secure channel based on the third key or a key derived from the third key.

The terminal provided in the embodiment of the present disclosure introduces AAP/AP into the AKMA basic network model. AAP/AP can replace one or more AF/AS to apply for AKMA application keys. AF/AS trusts AAP/AP. UE obtains the first key between AUSF and AAnF when establishing AKMA application keys for UE and AF/AS, thereby reducing the resources required by AUSF and AAnF to establish AKMA application keys for UE and AF/AS, reducing the delay in acquiring AKMA keys, and meeting the service requirements of low-latency scenarios.

It should be noted that the terminal provided in the embodiment of the present disclosure is a device capable of executing the above-mentioned authentication and/or key management method. All embodiments of the above-mentioned authentication and/or key management method are applicable to the terminal and can achieve the same or similar beneficial effects.

Considering that when the relevant AKMA network model is applied in edge computing scenarios, a manufacturer may have multiple APPs (Applications), which act as AF/AS. If the AKMA application key is to be used as a shared key between the UE and the APP for subsequent derivation of the key to protect the application layer, then each APP needs to request the AKMA application key from the AAnF in the core network. For latency-sensitive services, the generation time of the application layer shared key may not meet the low latency requirements.

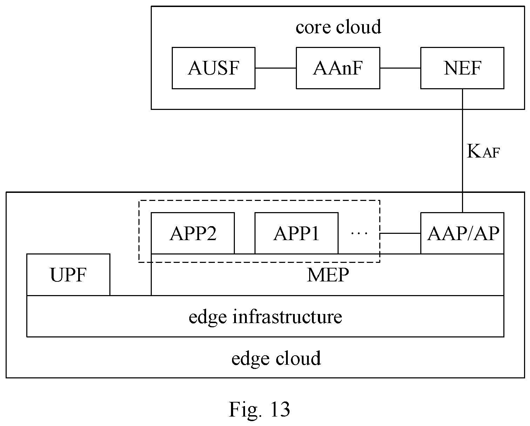

As shown in Fig. 13, an embodiment of the present disclosure provides an AAP/AP deployment architecture for a low-latency scenario in an edge cloud system. Multiple APPs that are sensitive to latency requirements (such as APP1, APP2, etc. (these APPs act as AF/AS) are deployed on the edge cloud. At this time, after AAP/AP interacts with the NEF and AAnF of the core cloud in advance to obtain a key, all APPs can use this secure channel, without each APP having to go to the core cloud to obtain a key separately, to establish an application layer secure channel between the UE and the APP, which can meet the low latency requirement.

An embodiment of the present disclosure also provides a communication device, including a memory, a processor, and a computer program stored in the memory and executable on the processor. When the processor executes the program, the various processes in the authentication and/or key management method embodiment as described above are implemented, and the same technical effect can be achieved. To avoid repetition, they will not be described here.

The embodiment of the present disclosure also provides a computer-readable storage medium on which a computer program is stored. When the program is executed by a processor, each process in the above-mentioned authentication and/or key management method embodiment is implemented, and the same technical effect can be achieved. To avoid repetition, it is not repeated here. The computer-readable storage medium is, for example, a read-only memory (ROM), a random access memory (RAM), a magnetic disk or an optical disk.

Those skilled in the art will appreciate that the embodiments of the present disclosure may be provided as methods, systems or computer program products. Therefore, the present disclosure may take the form of a complete hardware embodiment, a complete software embodiment or an embodiment combining software and hardware. Moreover, the present disclosure may take the form of a computer program product implemented on one or more computer-readable storage media (including but not limited to disk storage and optical storage, etc.) containing computer-usable program codes.

The present disclosure is described with reference to the flowchart and/or block diagram of the method, device (system) and computer program product according to the embodiment of the present disclosure. It should be understood that each process and/or box in the flowchart and/or block diagram, as well as the combination of the process and/or box in the flowchart and/or block diagram can be implemented by computer program instructions. These computer program instructions can be provided to a processor of a general-purpose computer, a special-purpose computer, an embedded processor or other programmable data processing device to generate a machine, so that the instructions executed by the processor of the computer or other programmable data processing device generate a device for implementing the functions specified in one process or multiple processes and/or one box or multiple boxes in the flowchart.

These computer program instructions may also be stored in a computer-readable storage medium that can direct a computer or other programmable data processing device to operate in a specific manner, so that the instructions stored in the computer-readable storage medium produce a paper product including an instruction device that implements the functions specified in one or more processes in the flowchart and/or one or more boxes in the block diagram.

These computer program instructions may also be loaded onto a computer or other programmable data processing device, causing the computer or other programmable device to execute a series of operating steps to produce computer-implemented processing, whereby the instructions executed on the computer or other programmable device provide steps for implementing the functions specified in one or more processes in the flowchart and/or one or more boxes in the block diagram.

The above are some implementation methods of the present disclosure. It should be pointed out that for ordinary technicians in this technical field, several improvements and modifications can be made without departing from the principles described in the present disclosure. These improvements and modifications should also be regarded as the scope of protection of the present disclosure.

## Claims

1. An authentication and/or key management method, comprising:
receiving, by a first device, a session establishment request message initiated by a user equipment (UE), wherein the request message carries a key identifier;
acquiring, by the first device, a first key between the first device and the UE according to the key identifier.

2. The method according to claim 1, further comprising:
generating, by the first device, a second key between the UE and a second device for the second device according to the first key.

3. The method according to claim 2, wherein the generating, by the first device, the second key between the UE and the second device for the second device according to the first key comprises:
generating, by the first device, the second key based on the first key and identification information of the second device.

4. The method according to claim 1, further comprising:
receiving, by the first device, a data which is protected by the UE based on a third key, and sending the data to the second device, wherein the third key is generated by the UE and is the same as the first key;
and/or,
receiving, by the first device, data sent by the second device, protecting the data based on the first key, and sending the data to the UE.

5. The method according to claim 1, wherein the acquiring the first key between the first device and the UE according to the key identifier comprises:
acquiring, by the first device, a local first key corresponding to the key identifier according to the key identifier;
or,
acquiring, by the first device, a first key corresponding to the key identifier from an AKMA Anchor Function (AAnF) according to the key identifier.

6. The method according to claim 1, further comprising: providing for the UE, by the first device, a list of second devices that the UE is able to access.

7. The method according to claim 1, further comprising: establishing, by the first device, a transport layer security (TLS) secure channel with the UE.

8. The method according to claim 7, wherein the establishing by the first device the TLS secure channel with the UE comprises:
generating, by the first device, a premaster key or an external pre-shared key of the TLS secure channel based on the first key or a key derived from the first key.

9. The method according to any one of claims 1, 7 and 8, further comprising:
sending, by the first device, first protected data to the UE, wherein the first protected data comprises data protected by the first device based on the first key or the key derived from the first key.

10. The method according to any one of claims 1, 7 and 8, further comprising:
receiving, by the first device, data sent by the UE and protected based on a third key or a key derived from the third key, wherein the third key is a key generated by the UE and is the same as the first key.

11. The method according to claim 1, wherein the first device is configured to a proxy of a group of application functions (AF)/application servers (AS) or to a proxy of AF/AS in a same trust domain.

12. The method according to claim 1, wherein the first device comprises an Authentication and Key Management for Applications (AKMA) application proxy, or an authentication proxy, or an AKMA authentication proxy.

13. An authentication and/or key management method, comprising:
sending, by a user equipment (UE), a session establishment request message to a first device, wherein the request message carries a key identifier;
receiving, by the UE, a first protected data sent by the first device, wherein the first protected data comprises a data protected by the first device based on a first key or a key derived from the first key, wherein the first key is acquired by the first device according to the key identifier.

14. The method according to claim 13, further comprising:
generating, by the UE, a third key that is the same as the first key, and sending, to the first device, a data protected by the third key or a key derived from the third key, to enable the first device to send the data to a second device;
and/or,
generating, by the UE, a fourth key that is the same as a second key, and receiving a second protected data sent by the second device, wherein the second protected data comprises a data protected by the second device based on the second key, wherein the second key is generated by the first device for the second device based on the first key;
and/or,
receiving, by the UE, a data protected and forwarded by the first device based on the first key.

15. The method according to claim 13, further comprising:
acquiring, by the UE, from the first device, a list of second devices that the UE is able to access.

16. The method according to claim 13, further comprising:
establishing, by the UE, a transport layer security (TLS) secure channel with the first device.

17. The method according to claim 13, wherein the establishing by the UE the TLS secure channel with the first device comprises:
generating, by the UE, a third key that is the same as the first key;
generating, by the UE, a premaster key or an external pre-shared key of the TLS secure channel based on the third key or a key derived from the third key.

18. The method according to claim 13, wherein the first device is configured to a proxy of a group of application functions (AF)/application servers (AS) or to a proxy of AF/AS in a same trust domain.

19. The method according to claim 13, wherein the first device comprises an Authentication and Key Management for Applications (AKMA) application proxy, or an authentication proxy, or an AKMA authentication proxy.

20. A first device for authentication and/or key management, comprising a first processing module and a first acquisition module; wherein
the first processing module is configured to receive a session establishment request message initiated by a user equipment (UE), wherein the request message carries a key identifier;
the first acquisition module is configured to acquire a first key between the first device and the UE according to the key identifier.

21. A terminal for authentication and/or key management, comprising a second processing module and a first receiving module:
the second processing module is configured to send a session establishment request message to a first device, wherein the request message carries a key identifier;
the first receiving module is configured to receive a first protected data sent by the first device, wherein the first protected data comprises a data protected by the first device based on a first key, wherein the first key is acquired by the first device according to the key identifier.

22. A communication device, comprising a memory, a processor, and a program stored in the memory and executable on the processor; the processor is configured to execute the program to perform the authentication and/or key management method according to any one of claims 1 to 12, or to perform the authentication and/or key management method according to any one of claims 13 to 19.

23. A computer-readable storage medium, wherein a computer program is stored in the computer-readable storage medium, the computer program is executed by a processor to perform the authentication and/or key management method according to any one of claims 1 to 12, or to perform the authentication and/or key management method according to any one of claims 13 to 19.
